# EUROPEAN PATENT APPLICATION

(11) **EP 4 685 363 A1**
(43) Date of publication of application: **28.01.2026**
(21) Application number: 24208769.0
(22) Date of filing: 24.10.2024
(51) Int. Cl.: F16D 55/226, F16D 65/18, F16D 65/56, F16D 121/02, F16D 121/14

(54) **BRAKE CALIPER**

(30) Priority: 26.07.2024 TW 113127864
(71) Applicant: TW Racing Parts Inc., Taichung City 407 (TW)
(72) Inventor: LIAO, Yang, 414 TAICHUNG CITY (TW)
(74) Representative: Regimbeau

(57) **Abstract**

A brake caliper (1) includes a housing unit (2), a piston unit (3) having a piston (31) disposed in the housing unit (2), a brake unit (4) including first and second lining members (41, 42) disposed at two sides of a brake disc (10), and a hand-brake unit (6) including a driving member (61), a threaded socket (65) driven by the driving member (61), and a threaded shaft (68) threadedly engaged with the threaded socket (65) and connected with the piston (31). In a foot-braking operation, the threaded shaft (68) is rotated relative to the threaded socket (65) to actuate the piston (31) to move away from the threaded socket (65), and the piston (31) presses the first lining member (41) against the brake disc (10). Thus, the travel stroke of operation of the hand-brake unit (6) may be automatically compensated by the foot-braking operation.

## Description

The disclosure relates to a brake device for a vehicle, and more particularly to a brake caliper with a hand-brake function.

A conventional brake caliper device disclosed in TWM394267 includes a caliper housing, two swing arms pivotably disposed on the caliper housing, two lining members interposed between the swing arm and a brake disc, a brake cable connected with the swing arms and pulled by a handbrake lever, and a hydraulic piston unit operated by a pedal brake to drive the lining members to abut against the brake disc. Through the handbrake lever pulling the brake cable, the swing arms are moved to drive the lining members to abut against the brake disc.

Another conventional brake caliper device disclosed in TWM415088 includes two lining members disposed on two positioning members that are connected with a piston unit, and a handbrake unit having a driving member and two actuating members threadedly connected with the driving member. The driving member is rotated by the pulling of a handbrake lever which drives the actuating members to move the positioning members toward a brake disc so as to push the lining members toward the brake disc for braking.

In these conventional brake caliper devices, the lining members of the brake caliper devices may wear off over a period of time under regular usage. However, there is no adjusting mechanism to compensate for the wearing out of the lining members. In such a case, an idle stroke when performing the handbrake operation might occur, which will result in less braking efficiency.

Therefore, an object of the disclosure is to provide a brake caliper that can alleviate at least one of the drawbacks of the prior art.

According to an aspect of the disclosure, there is provided a brake caliper according to claim 1.

During the foot-braking operation, the threaded shaft is rotated relative to the threaded socket and brings the first piston to move away from the threaded socket along the mounting axis so as to keep the first lining member away from the first end surface of the brake disc by a fixed gap even when the first lining member is worn for long-time use. Also, with the threaded engagement of the threaded shaft with the threaded socket, the hand-braking operation can be successfully and normally performed. Thus, the travel stroke of operation of the hand-brake unit of the brake caliper for the lining member wear can be automatically compensated by the foot-braking operation.

Other features and advantages of the disclosure will become apparent in the following detailed description of the embodiment with reference to the accompanying drawings. It is noted that various features may not be drawn to scale.
FIG. 1 is a perspective view illustrating an embodiment of a brake caliper according to the disclosure assembled with a brake disc.
FIG. 2 is an exploded perspective view of the embodiment.
FIG. 3 is a fragmentary sectional view of a first housing of the embodiment.
FIG. 4 is an exploded perspective view of a portion of the embodiment.
FIG. 5 is a sectional view of the embodiment, illustrating a first piston, a threaded shaft and a retaining assembly thereof.
FIG. 6 is an exploded sectional view of the threaded shaft and a threaded socket of the embodiment.
FIG. 7 is a sectional view taken along line VII-VII of FIG. 3, illustrating the embodiment in a non-brake state.
FIG. 8 is a sectional view similar to FIG. 7, illustrating the embodiment in a foot-brake state.
FIG. 9 is a sectional view similar to FIG. 7, illustrating the embodiment in a hand-brake state.
FIG. 10 is a sectional view taken along line X-X of FIG. 3, illustrating a movable seat and a transmission seat in the non-brake state.
FIG. 11 is a sectional view similar to FIG. 10, illustrating the movable seat and the transmission seat in the hand-brake state.
FIG. 12 is a sectional view similar to FIG. 7, illustrating a hand-brake unit in a compensation state once first and second lining members wear off.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

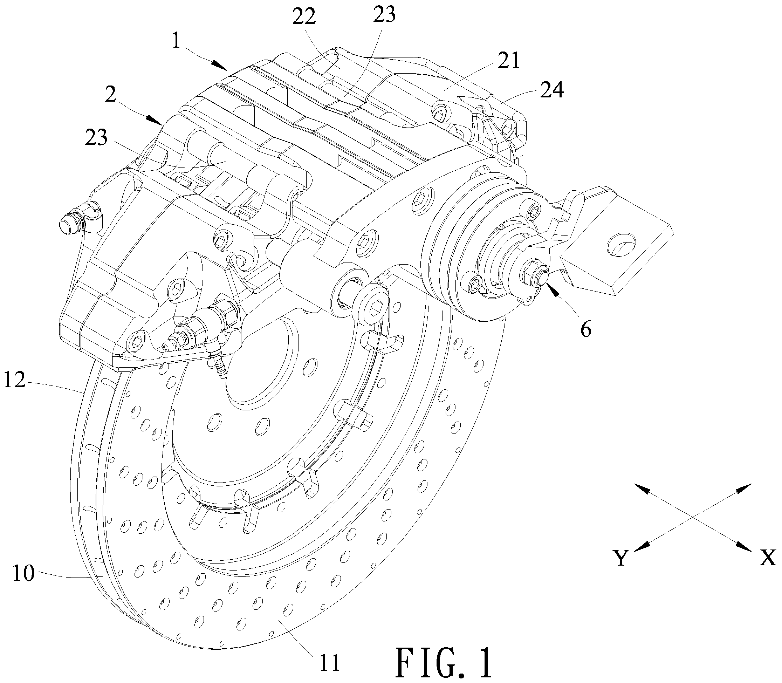

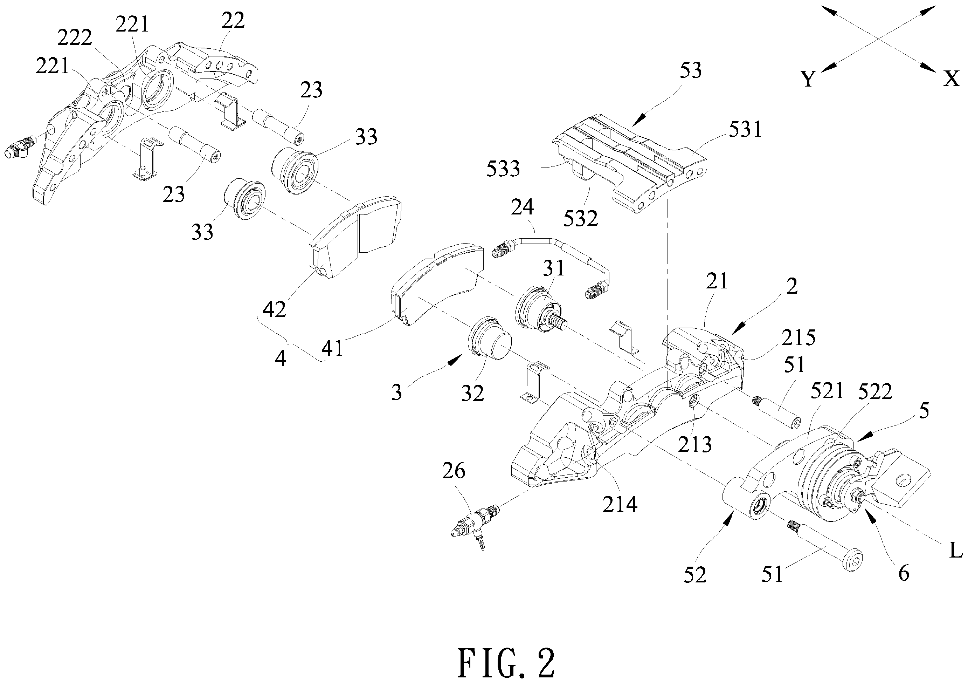

Referring to FIGS. 1 and 2, an embodiment of a brake caliper 1 according to the disclosure is used with a brake disc 10 of a vehicle (not shown). The brake disc 10 has a first end surface 11 and a second end surface 12 opposite to each other in a left-right direction (X). The brake caliper 1 includes a housing unit 2, a piston unit 3, a brake unit 4, a transmission unit 5 and a hand-brake unit 6.

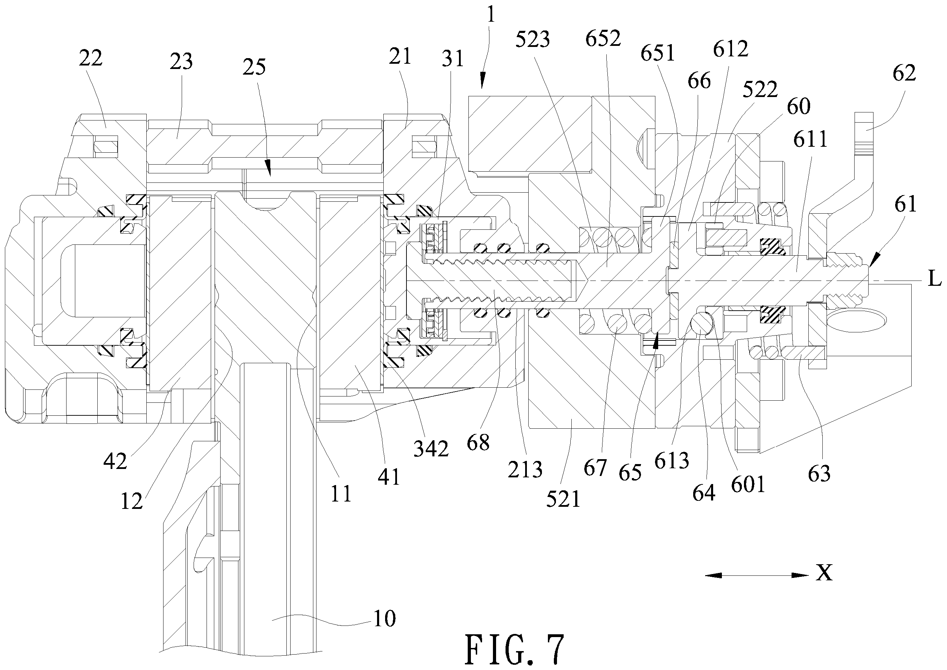

The housing unit 2 includes a first housing 21 which is disposed adjacent to the first end surface 11 of the brake disc 10, a second housing 22 which is coupled with the first housing 21 and disposed adjacent to the second end surface 12 of the brake disc 10, two connecting rods 23 which extend in the left-right direction (X) to interconnect the first housing 21 and the second housing 22, and an oil connecting pipe 24 which is connected between the first housing 21 and the second housing 22. The first housing 21 and the second housing 22 cooperatively define a disc accommodation space 25 (see FIG. 7) therein for receiving the brake disc 10. The connecting rods 23 are disposed on upper ends of the first housing 21 and the second housing 22.

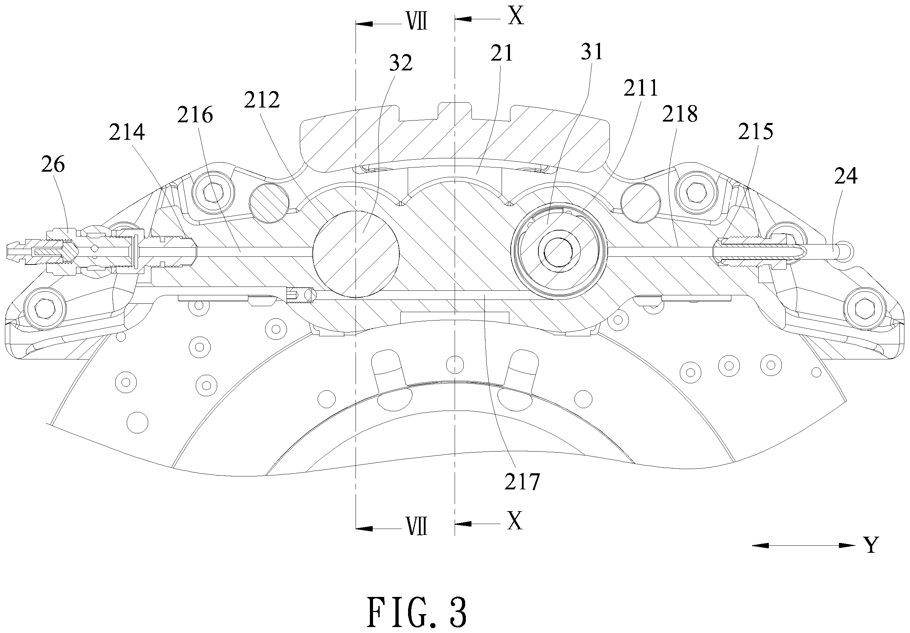

With reference to FIGS. 2 to 4, the first housing 21 has a first oil chamber 211 and a second oil chamber 212 which are spaced apart from each other in a front-rear direction (Y) that is transverse to the left-right direction (X), a mounting hole 213 which extends along a mounting axis (L) in the left-right direction (X) and which is in fluid communication with the first oil chamber 211, an inlet hole 214 which is formed adjacent to the second oil chamber 212 for insertion of an oil introducing pipe 26, a connecting hole 215 which is formed adjacent to the first oil chamber 211 for insertion of an end of the oil connecting pipe 24, an entering duct 216 which interconnects the inlet hole 214 and the entering duct 216, a connecting duct 217 which interconnects the first oil chamber 211 and the second oil chamber 212, and an exit duct 218 which interconnects the first oil chamber 211 and the connecting hole 215. Hydraulic oil is introduced from the oil introducing pipe 26 to the entering duct 216.

The second housing 22 has two third oil chambers 221 which are spaced apart from each other in the front-rear direction (Y), a sinkhole 222 which is formed between the two third oil chambers 221, an inlet hole (not shown) which is formed for insertion of the other end of the oil connecting pipe 24, an entering duct (not shown) which interconnects the inlet hole and one of the third oil chambers 221, and a communicating duct (not shown) which interconnects the two third oil chambers 221. The oil ducts in the second housing 22 are arranged substantially similar to those in the first housing 21.

When a foot-braking process is initiated, hydraulic oil is introduced from a brake oil pump (not shown) into the inlet hole 214 through the oil introducing pipe 26, and through the entering duct 216, the connecting duct 217, the exit duct 218, the oil connecting pipe 24 in the first housing 21, and the entering duct and the communicating duct in the second housing 22 to enter the first oil chamber 211, the second oil chamber 212 and the third oil chambers 213.

With reference to FIGS. 2 to 4, the piston unit 3 includes a first piston 31 which is movably disposed in the first oil chamber 211 along the mounting axis (L), a second piston 32 which is movably disposed in the second oil chamber 212 along the left-right direction (X), and two third pistons 33 which are respectively and movably disposed in the third oil chambers 221 along the left-right direction (X). The first piston 31 and the second piston 32 are hydraulically operated by the hydraulic oil flowing in the first oil chamber 211 and the second oil chamber 212, respectively. The third pistons 33 are hydraulically operated by the hydraulic oil flowing in the third oil chambers 221, respectively.

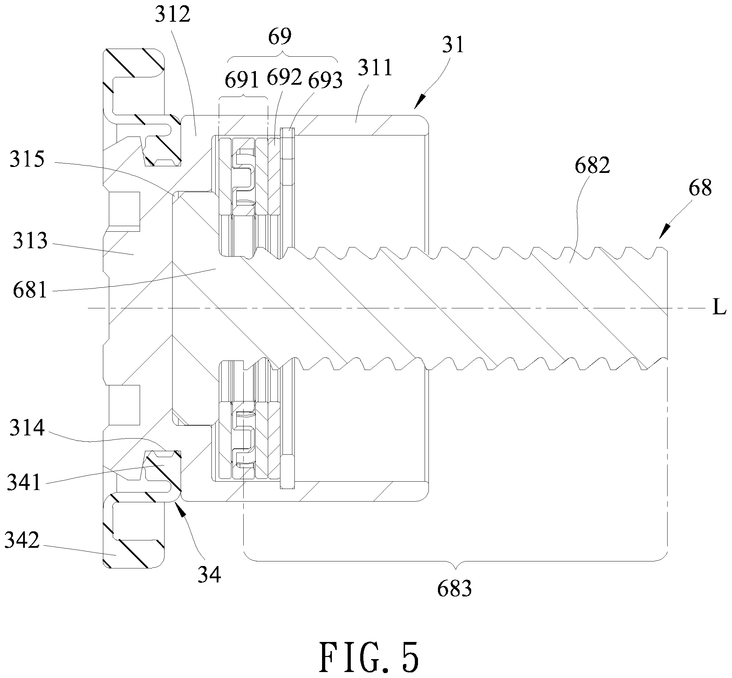

With reference to FIG. 5, the first piston 31 has a surrounding wall 311 which surrounds the mounting axis (L), a side wall 312 which is connected with an end of the surrounding wall 311 proximal to the brake disc 10 (referring to FIG. 7), a piston crown 313 which extends from the side wall 312 toward the brake disc 10, an annular groove 314 which is formed in the piston crown 313 and surrounds the mounting axis (L), and a notched slot 315 which is formed in the side wall 312 and recessed from an end surface of the side wall 312. A dust protection cover 34 has an inner peripheral portion 341 engaged in the annular groove 314, and an outer peripheral portion 342 engaged in an end surface of the first housing 21 proximal to the brake disc 10 (referring to FIG. 7).

With reference to FIG. 2, the brake unit 4 includes a first lining member 41 which is interposed between the first end surface 11 of the brake disc 10 and the first housing 21, and a second lining member 42 which is interposed between the second end surface 12 of the brake disc 10 and the second housing 22. The first lining member 41 is for receiving a hydraulic press force generated as a result of movement of the first piston 31 and the second piston 32. The second lining member 42 is for receiving a hydraulic press force generated as a result of movement of the third pistons 33.

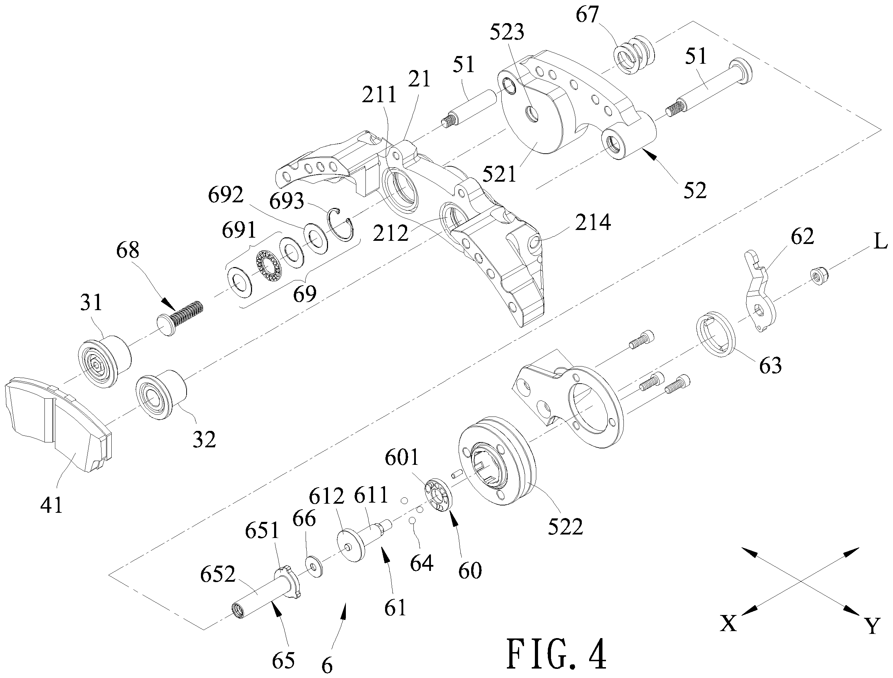

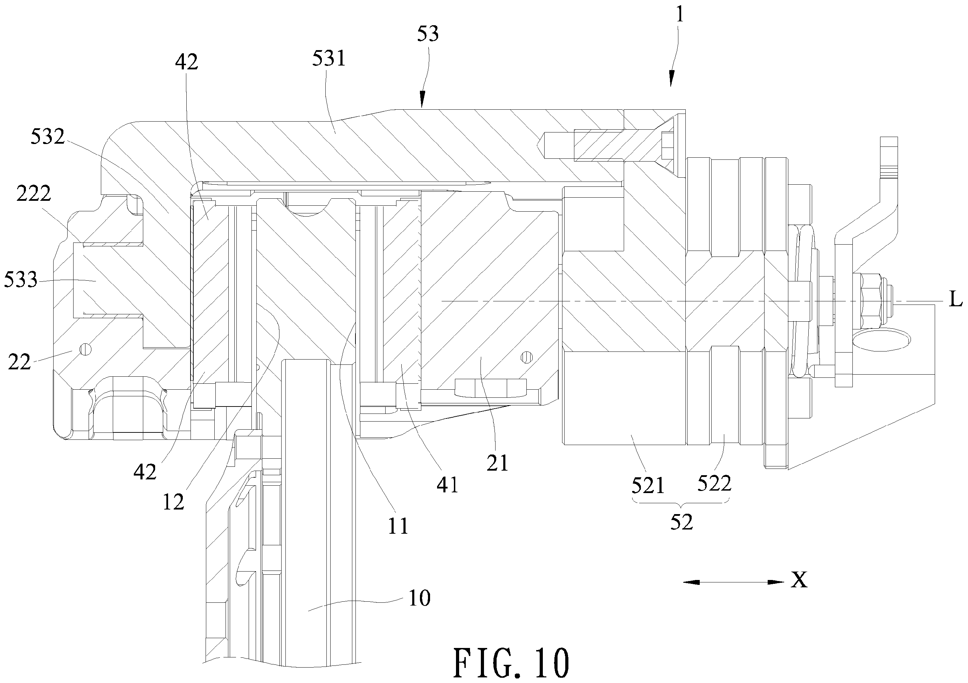

With reference to FIGS. 2 and 4, the transmission unit 5 is movably disposed on the housing unit 2, and includes two guiding rods 51 which are disposed on and extend from the first housing 21, a movable seat 52 which is movably disposed on the guiding rods 51 to be movable relative to the first housing 21, and a transmission seat 53 which is connected with the movable seat 52. The guiding rods 51 are spaced apart from each other in the front-rear direction (Y) and extend in the left-right direction (X). The movable seat 52 includes a first seat half 521 which is connected with the transmission seat 53 and through which the guiding rods 51 extend, and a second seat half 522 which is securely coupled with the first seat half 521 to cooperatively define an axial hole 523 that extends along the mounting axis (L) (referring to FIG. 7). The axial hole 523 is in the form of a stepped hole. The transmission seat 53 has a connecting plate 531 which is connected with the first seat half 521 and located at upper ends of the first housing 21 and the second housing 22, and a pressing plate 532 which extends downwardly from the connecting plate 531 to be interposed between the second housing 22 and the second lining member 42. The pressing plate 532 has a pin 533 which is movably disposed in the sinkhole 222 in the second housing 22 along the left-right direction (X) (see FIG. 10).

With reference to FIGS. 4, 5 and 7, the hand-brake unit 6 includes a roller positioning plate 60 which is secured in the second seat half 522, a driving member 61 which extends through the axial hole 523 and is rotatable relative to the ball positioning plate 60, a handbrake lever 62 which is connected with a portion of the driving member 61 projecting outwardly of the second seat half 522, a first biasing member 63 which abuts against the handbrake lever 62 and the second seat half 522, three rollers 64 which are rollably disposed between the roller positioning plate 60 and the driving member 61, a threaded socket 65 which is disposed in the axial hole 523 and the mounting hole 213, a connecting bearing 66 which is disposed between the driving member 61 and the threaded socket 65, a second biasing member 67 which is disposed in the axial hole 523 and abuts against the first seat half 521 and the threaded socket 65, a threaded shaft 68 which is threadedly engaged with the threaded socket 65 and rotatably connected with the first piston 31, and a retaining assembly 69 which retains the threaded shaft 68 to the first piston 31.

With reference to FIGS. 4 and 7, specifically, the roller positioning plate 60 has three first grooves 601 angularly spaced apart from one another and surrounding the mounting axis (L) for respectively receiving the rollers 64. The driving member 61 has a driving shaft 611 extending along the mounting axis (L) to be connected with the handbrake lever 62, a driving head 612 disposed opposite to the handbrake lever 62 and having three second grooves 613 (only one is shown in FIG. 7) which are formed in a side surface of the driving head 612 and angularly spaced apart from one another about the mounting axis (L) for respectively receiving the rollers 64. In this embodiment, each of the first and second grooves 601, 613 is elongated to extend about the mounting axis (L), and has a groove depth that varies in its extending direction. Specifically, the groove depth is largest at a middle part of each groove 601, 613, and decreases gradually toward two sides thereof.

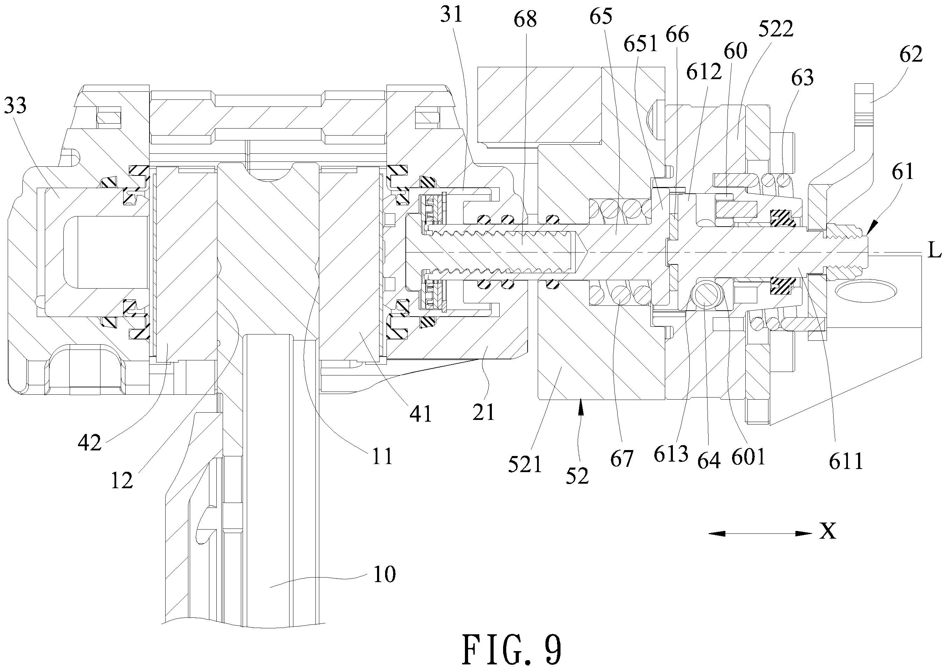

With reference to FIGS. 7 and 9, the first grooves 601 and the second grooves 613 are respectively aligned with each other for respectively receiving the rollers 64. With the variety of the groove depth of the grooves, when the driving shaft 611 is actuated by the handbrake lever 62 to rotate about the mounting axis (L) relative to the roller positioning plate 60, each roller 64 is able to be moved in the corresponding first and second grooves 601, 613 so as to move the driving head 612 close to or remote from the roller positioning plate 60. FIG. 9 illustrates the state when the driving head 612 is moved away from the roller positioning plate 60.

With reference to FIG. 7, the first biasing member 63 has an end disposed on the second seat half 522, and the other end disposed on the handbrake lever 62. In the embodiment, the first biasing member 63 is a torsion spring.

With reference to FIGS. 4, 6 and 7, the threaded socket 65 has a socket head 651 abutting against the connecting bearing 66, and a tubular wall 652 which extends from the socket head 651 along the mounting axis (L) and is disposed in the axial hole 523 and the mounting hole 213. The tubular wall 652 extends through the mounting hole 213, and has an inner tubular surface 653 which defines a counterbore 655 and which is formed with an internally threaded section 654. The counterbore 655 is opened at an end opposite to the socket head 651. The connecting bearing 66 is interposed and sandwiched between the driving head 612 and the threaded socket 651.

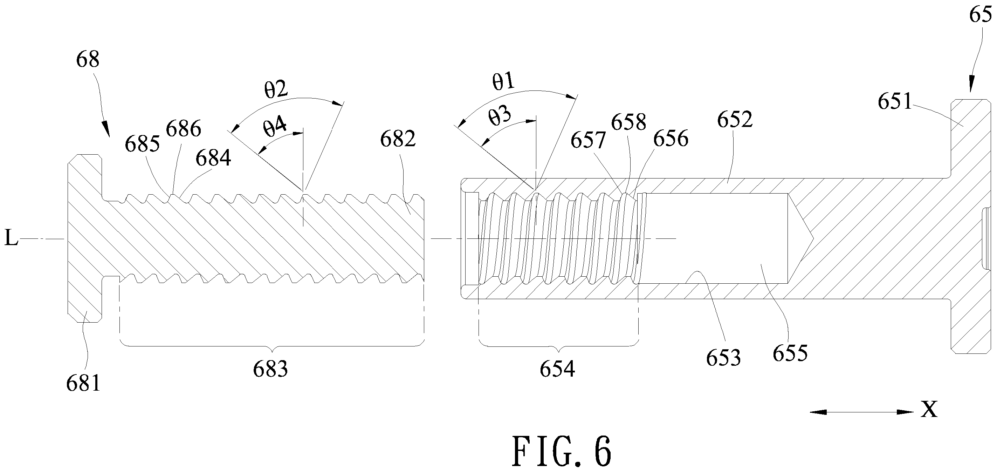

With reference to FIG. 6, in the embodiment, the internally threaded section 654 is in the form of a multi-start thread, such as a four-start thread, and has a plurality of first stab flanks 656 which face the opened end of the counterbore 655 and which are spaced apart from one another along the left-right direction (X), a plurality of first load flanks 657 which face away from the opened end of the counterbore 655 and which are spaced apart from one another along the left-right direction (X), and a plurality of roots 658, each of which interconnects each of the first stab flanks 656 and an adjacent one of the first load flanks 657. The internally threaded section 654 has a first thread angle (θ1) between each of the first stab flanks 656 and the adjacent first load flank 657. The first thread angle (θ1) ranges from 65 degrees to 85 degrees. The internally threaded section 654 has a third flank angle (θ3) between each of the first stab flanks 656 and an imaginary line perpendicular to the mounting axis (L). The third flank angle (θ3) ranges from 45 degrees to 55 degrees.

With reference to FIG. 7, the second biasing member 67 is sleeved around the tubular wall 652 of the threaded socket 65, and has two ends opposite to each other in the left-right direction (X) and abutting against the first seat half 521 and the socket head 651.

With reference to FIGS. 5 and 6, the threaded shaft 68 has a head 681 which is engaged in the notched slot 315 to be rotatably connected with the first piston 31, and a bolt 682 which extends from the head 681 along the mounting axis (L). The bolt 682 has an externally threaded section 683 that is threadedly engaged with the internally threaded section 654.

In the embodiment, the externally threaded section 683 is in the form of a multi-start thread, such as a four-start thread, and has a plurality of second stab flanks 684 which face away from the head 681 and which are spaced apart from one another along the left-right direction (X), a plurality of second load flanks 685 which face the head 681 and which are spaced apart from one another along the left-right direction (X), and a plurality of crests 686, each of which interconnects each of the second stab flanks 684 and an adjacent one of the second load flanks 685. The externally threaded section 683 has a second thread angle (θ2) between each of the second stab flanks 684 and the adjacent second load flank 685. The second thread angle (θ2) is equal to the first thread angle (θ1) and ranges from 65 degrees to 85 degrees. The externally threaded section 683 has a fourth flank angle (θ4) between each of the second stab flanks 684 and the imaginary line perpendicular to the mounting axis (L). The fourth flank angle (θ4) is equal to the third flank angle (θ3), and ranges from 45 degrees to 55 degrees.

With reference to FIG. 5, the retaining assembly 69 is to retain the threaded shaft 68 to the first piston 31, and has a bearing 691 which abuts against the head 681 of the threaded shaft 68, a washer 692 which abuts against the bearing 691 at a side opposite to the head 681, and a snap ring 693 which abuts against the washer 692 and which is retainingly engaged with the surrounding wall 311 of the first piston 31 to hold the threaded shaft 68 from movement along the mounting axis (L) relative to the first piston 31. With the bearing 691, the threaded shaft 68 is rotatable about the mounting axis (L) relative to the first piston 31. In the embodiment, the bearings 66, 691 are pin bearings, and may be ball bearings or the like.

With reference to FIGS. 7 and 10, after the brake caliper 1 is fully assembled and is mounted with the brake disc 10, in a non-used state, there exists gaps respectively between the first lining member 41 and the first end surface 11 of the brake disc 10, and between the second lining member 42 and the second end surface 12 of the brake disc 10.

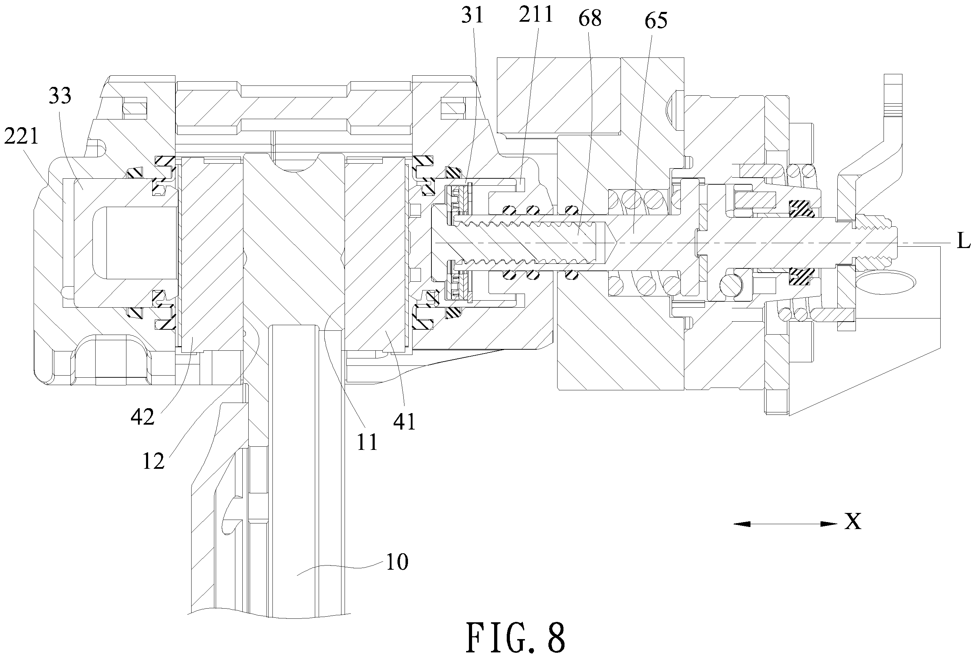

With reference to FIG. 8, when a foot-braking process is operated, the first piston 31 is pressed by hydraulic oil in the first oil chamber 211 toward the first lining member 41 such that the threaded shaft 68 is rotated relative to the threaded socket 65 and the first piston 31 about the mounting axis (L) and the threaded shaft 68 is moved away from the threaded socket 65 along the mounting axis (L) to bring the first piston 31 to abut against and press the first lining member 41. Meanwhile, the second piston 32 (referring to FIG. 4) is pressed by hydraulic oil in the second oil chamber 212 to abut against and press the first lining member 41. The first lining member 41 is pressed by the pressing force of the first piston 31 and the second piston 32 against the first end surface 11 of the brake disc 10 without any gap between the first lining member 41 and the first end surface 11. Similarly, the third pistons 33 are pressed by hydraulic oil in the third oil chambers 221 to abut against and press the second lining member 42 such that the second lining member 42 is pressed against the second end surface 12 of the brake disc 10 without any gap between the second lining member 42 and the second end surface 12.

When the process of the foot-braking process is stopped, no hydraulic oil is in the first oil chamber 211, the second oil chamber 212 is applied to press the first piston 31 and the second piston 32, and no hydraulic oil in the third oil chambers 221 is applied to press the third pistons 33. Along with the driving of the vehicle, the first lining member 41 and the second lining member 42 are pushed slightly away from the brake disc 10 during rotation of the vehicle wheel, and the first lining member 41 brings the first piston 31 and the second piston 32 to move away from the first end surface 11 of the brake disc 10, while the second lining member 42 brings the third pistons 33 to move away from the second end surface 12 of the brake disc 10. Hence, the gaps exist between the first lining member 41 and the first end surface 11 and between the second lining member 42 and the second end surface 12. Since the threaded shaft 68 is loosely engaged with the threaded socket 65, when the first lining member 41 presses the first piston 31 away from the first end surface 11, the first piston 31 brings the threaded shaft 68 to move linearly along the mounting axis (L) relative to the threaded socket 65 by a small distance, which is the clearance between the internally threaded section 654 and the externally threaded section 683, and which provides enough space for generating a gap between the first lining member 41 and the first end surface 11.

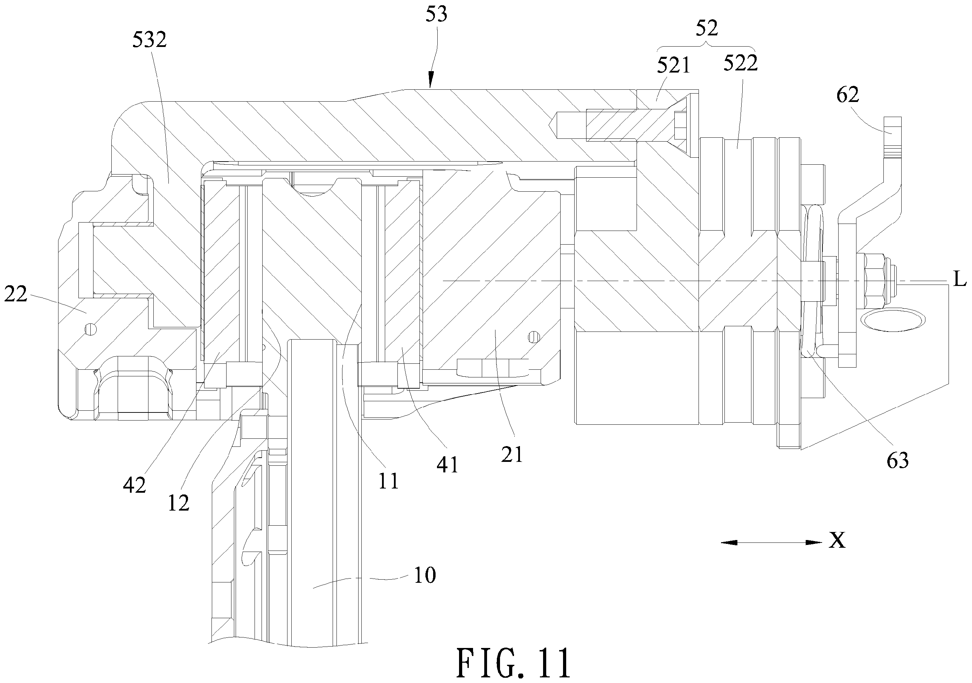

With reference to FIGS. 9 and 11, when a hand-braking process is operated, the handbrake lever 62 is rotated about the mounting axis (L) to rotate the driving member 61. With the rollers 64 in the first grooves 601 and the second grooves 613, the rotation of the driving member 61 results in movement of the driving head 612 of the driving member 61 along the mounting axis (L) away from the roller positioning plate 60. The second biasing member 67 is compressed by the movement of the driving head 612 which presses the socket head 651 of the threaded socket 65 through the connecting bearing 66. Also, the threaded socket 65 brings the threaded shaft 68, the first piston 31 and the first lining member 41 to move toward the first end surface 11 of the brake disc 10 so as to eliminate the gap between the first lining member 41 and the first end surface 11. After the first piston 31 presses the first lining member 41 against the brake disc 10, the handbrake lever 62 is further operated to rotate the driving member 61, and, with the rollers 64 in the first grooves 601 and the second grooves 613, the movable seat 52 is moved along the mounting axis (L) away from the first housing 21, and the second biasing member 67 is compressed by the movement of the first seat half 521. The transmission seat 53 is moved with the movable seat 52 such that the pressing plate 532 brings the second lining member 42 to move toward the second end surface 12 of the brake disc 10 to eliminate the gap between the second lining member 42 and the second end surface 12.

With reference to FIGS. 10 and 11, during the hand-braking process, the movable seat 52 is moved away from the first housing 21 along the mounting axis (L) so as to increase the clearance between the first seat half 521 of the movable seat 52 and the first housing 21. Also the transmission seat 53 is moved with the movable seat 52 such that a clearance is generated between the pressing plate 532 and the second housing 22.

It is noted that, in FIG. 9, each of the third pistons 33 (only one is shown) is spaced apart from the second lining member 42 by a clearance. Specifically, since the second lining member 42 is pressed toward the second end surface 12 of the brake disc 10 by the pressing plate 532 of the transmission seat 53, rather than by the third pistons 33 during the hand-braking process, the clearance is generated between each of the third pistons 33 and the second lining member 42.

In operating the hand-braking process, firstly, the threaded socket 65 is moved toward the first housing 21 to have the socket head 651 compress the second biasing member 67 so as to generate a biasing returning force. Then, the first seat half 521 of the movable seat 52 is moved away from the first housing 21 and further compresses the second biasing member 67 so as to increase the biasing returning force. The handbrake lever 62 is moved with the driving member 61 toward the first housing 21 when the handbrake lever 62 brings the driving member 61 to rotate about the mounting axis (L). Also, the movable seat 52 is moved away from the first housing 21. Thus, the first biasing member 63 is squeezed by the handbrake lever 62 and the second seat half 522 to generate a biasing returning force.

When the handbrake lever 62 is rotated in an opposite direction about the mounting axis (L) to rotate the driving member 61, the handbrake lever 62 is rotated rapidly with the biasing returning force of the first biasing member 63. During the rotation of the driving member 61 in the opposite direction, with the rollers 64 in the first grooves 601 and the second grooves 613, the movable seat 52 is pressed by the biasing returning force of the second biasing member 67 and moved toward the first housing 21, and the threaded socket 65 is pressed by the biasing returning force of the second biasing member 67 to move the threaded shaft 68 and the first piston 31 away from the first lining member 41. The threaded socket 65 abuts against and presses the driving member 61 through the connecting bearing 66 such that the driving member 61 is moved away from the first housing 21. Thus, the brake caliper 1 is returned to the state shown in FIG. 7.

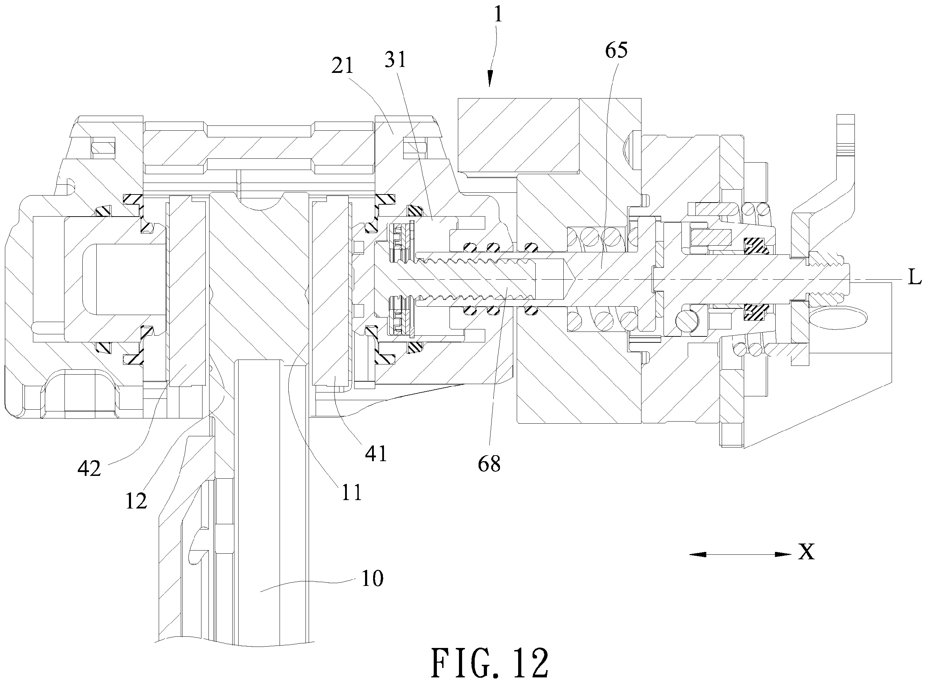

With reference to FIG. 12, once the first and second lining members 41, 42 are worn out after a prolonged -period of foot-braking use, since the threaded shaft 68 is moved with the first piston 31 along the mounting axis (L) to be further away from the threaded socket 65 during the foot-braking operation, the first lining member 41 may be kept away from the first end surface 11 of the brake disc 10 by the same gap as that in FIG. 7. Thus, the brake caliper 1 may perform the hand-braking operation same as that described above in FIGS. 9 and 11.

Therefore, with each of the internally threaded section 654 of the threaded socket 65 and the externally threaded section 683 of the threaded shaft 68 in the form of a four start thread, the first thread angle (θ1) and the second thread angle (θ2) ranging from 65 degrees to 85 degrees, and the third flank angle (θ3) and the fourth flank angle (θ4) ranging from 45 degrees to 55 degrees, in the foot-braking operation, the first piston 31 is pressed by the hydraulic oil in the first oil chamber 211 to move toward the first lining member 41 so as to bring the threaded shaft 68 to rotate relative to the threaded socket 65 and the first piston 31 about the mounting axis (L), and to move the threaded shaft 68 away from the threaded socket 65 along the mounting axis (L) such that the first piston 31 presses the first lining member 41 against the first end surface 11 of the brake disc 10. The first piston 31, as the first lining member 41 wears out after a prolonged period of use, is being gradually moved closer to the first lining member 41, and the threaded shaft 68 is being moved further away from the threaded socket 65. With the threaded engagement of the threaded shaft 68 and the threaded socket 65, the hand-braking operation may be successfully and normally performed. Thus, the operation of the handbrake unit 6 of the brake caliper 1 adapted for the wearing out of the first and second lining members 41, 42 may be automatically compensated by the foot-braking operation.

In particular, with the first thread angle (θ1) and the second thread angle (θ2) ranging from 65 degrees to 85 degrees, and the third flank angle (θ3) and the fourth flank angle (θ4) ranging from 45 degrees to 55 degrees, the threaded shaft 68 is rotatable about the mounting axis (L), and is movable along the mounting axis (L) away from the threaded socket 65 in a reliable manner. If the first thread angle (θ1) or the second thread angle (θ2) is either smaller than 65 degrees or larger than 85 degrees, or if the third flank angle (θ3) or the fourth flank angle (θ4) is either smaller than 45 degrees or larger than 55 degrees, when the first piston 31 moves toward the first lining member 41, the threaded shaft 68 may not be rotatable relative to the threaded socket 65 and the first piston 31 about the mounting axis (L), and at the same time may be movable away from the threaded socket 65 along the mounting axis (L).

As illustrated, during the foot-braking operation, the threaded shaft 68 is rotated relative to the threaded socket 65 and brings the first piston 31 to move away from the threaded socket 65 along the mounting axis (L) so as to keep the first lining member 41 away from the first end surface 11 of the brake disc 10 by the same gap as that shown in FIG. 7 even when the first and second lining members 41, 42 are worn out. Also, with the threaded engagement of the threaded shaft 68 with the threaded socket 65, the hand-braking operation may be successfully and normally performed. Thus, the travel stroke of the operation of the handbrake unit 6 of the brake caliper 1 adapted for the wearing out of the first and second lining members 41, 42 may be automatically compensated for by the foot-braking operation.

## Claims

1. A brake caliper (1) for use with a brake disc (10), the brake disc (10) having a first end surface (11) and a second end surface (12) opposite to each other in a left-right direction (X), comprising:
a housing unit (2) including a first housing (21) which is disposed adjacent to the first end surface (11) of the brake disc (10), and a second housing (22) which is coupled with said first housing (21) and disposed adjacent to the second end surface (12) of the brake disc (10), said first housing (21) and said second housing (22) cooperatively defining a disc accommodation space (25) therein for receiving the brake disc (10), said first housing (21) having a first oil chamber (211) and a mounting hole (213) which extends along a mounting axis (L) in the left-right direction (X) and in fluid communication with said first oil chamber (211);
a piston unit (3) including a first piston (31) which is movably disposed in said first oil chamber (211) along the mounting axis (L);
a brake unit (4) including a first lining member (41) which is interposed between the first end surface (11) of the brake disc (10) and said first housing (21), and a second lining member (42) which is interposed between the second end surface (12) of the brake disc (10) and said second housing (22), said first lining member (41) being for receiving a hydraulic press force generated as a result of movement of said first piston (31); and
a hand-brake unit (6), **characterized in that**:
said hand-brake unit (6) includes a driving member (61) which is movable along the mounting axis (L), a threaded socket (65) which is mounted on said first housing (21), which is driven by said driving member (61) to move along the mounting axis (L) relative to said first housing (21), and a threaded shaft (68) which is threadedly engaged with said threaded socket (65) and which is rotatably connected with said first piston (31),
wherein, said first piston (31) is pressed by hydraulic oil in said first oil chamber (211) to move toward said first lining member (41) and to rotate said threaded shaft (68) about the mounting axis (L) relative to said threaded socket (65), and at a same time, said threaded shaft (68) actuates said first piston (31) to move along the mounting axis (L) away from said threaded socket (65) to permit said first piston (31) to press said first lining member (41), which brings said first lining member (41) to abut against the first end surface (11) of the brake disc (10).

2. The brake caliper (1) of claim 1, wherein said threaded socket (65) has a tubular wall (652) which extends through said mounting hole (213), said tubular wall (652) having an inner tubular surface (653) which defines a counterbore (655) and which is formed with an internally threaded section (654), said threaded shaft (68) having a head (681) which is rotatably connected with said first piston (31), and a bolt (682) which extends from said head (681) along the mounting axis (L) and which has an externally threaded section (683) that is threadedly engaged with said internally threaded section (654), each of said internally threaded section (654) and said externally threaded section (683) being in form of a multi-start thread.

3. The brake caliper of claim 2, wherein said internally threaded section (654) has a plurality of first stab flanks (656) which face an opened end of said counterbore (655) and which are spaced apart from one another, a plurality of first load flanks (657) which face away from said opened end of said counterbore (655) and which are spaced apart from one another, and a plurality of roots (658), each of which interconnects each of said first stab flanks (656) and an adjacent one of said first load flanks (657), said externally threaded section (683) having a plurality of second stab flanks (684) which face away from said head (681) and which are spaced apart from one another, a plurality of second load flanks (685) which face said head (681) and which are spaced apart from one another, and a plurality of crests (686), each of which interconnects each of said second stab flanks (684) and an adjacent one of said second load flanks (685), said internally threaded section (654) having a first thread angle (θ1) between each of said first stab flanks (656) and said adjacent first load flank (657), said externally threaded section (683) having a second thread angle (θ2) between each of said second stab flanks (684) and said adjacent second load flank (685), said first thread angle (θ1) and said second thread angle (θ2) being equal and ranging from 65 degrees to 85 degrees.

4. The brake caliper of claim 3, wherein said internally threaded section (654) has a third flank angle (θ3) between each of said first stab flanks (656) and an imaginary line perpendicular to the mounting axis (L), said externally threaded section (683) has a fourth flank angle (θ4) between each of said second stab flanks (684) and the imaginary line perpendicular to the mounting axis (L), and said third flank angle (θ3) and said fourth flank angle (θ4) are equal and range from 45 degrees to 55 degrees.

5. The brake caliper of claim 1, wherein said threaded shaft (68) has a head (681) which is rotatably embedded in said first piston (31), and a bolt (682) which extends from said head (681) along the mounting axis (L), said hand-brake unit (6) further including a retaining assembly (69) which retains said threaded shaft (68) to said first piston (31), said retaining assembly (69) having a bearing (691) which abuts against said head (681), a washer (692) which abuts against said bearing (691) at a side opposite to said head (681), and a snap ring (693) which abuts against said washer (692) and which is mounted on said first piston (31) to hold said threaded shaft (68) from movement along the mounting axis (L) relative to said first piston (31).

6. The brake caliper of claim 5, wherein said first piston (31) has a surrounding wall (311) which surrounds the mounting axis (L), a side wall (312) which is connected with an end of said surrounding wall (311) proximal to the brake disc (10), a piston crown (313) which extends from said side wall (312) toward the brake disc (10), and a notched slot (315) which is formed in said side wall (312) and recessed from an end surface of said side wall (312), said head (681) of said threaded shaft (68) being engaged in said notched slot (315), said snap ring (693) being retainingly engaged with said surrounding wall (311).

## Amended claims

### Amended claims in accordance with Rule 137(2) EPC.

1. A brake caliper (1) for use with a brake disc (10), the brake disc (10) having a first end surface (11) and a second end surface (12) opposite to each other in a left-right direction (X), comprising:
a housing unit (2) including a first housing (21) which is disposed adjacent to the first end surface (11) of the brake disc (10), and a second housing (22) which is coupled with said first housing (21) and disposed adjacent to the second end surface (12) of the brake disc (10), said first housing (21) and said second housing (22) cooperatively defining a disc accommodation space (25) therein for receiving the brake disc (10), said first housing (21) having a first oil chamber (211) and a mounting hole (213) which extends along a mounting axis (L) in the left-right direction (X) and in fluid communication with said first oil chamber (211);
a piston unit (3) including a first piston (31) which is movably disposed in said first oil chamber (211) along the mounting axis (L);
a brake unit (4) including a first lining member (41) which is interposed between the first end surface (11) of the brake disc (10) and said first housing (21), and a second lining member (42) which is interposed between the second end surface (12) of the brake disc (10) and said second housing (22), said first lining member (41) being for receiving a hydraulic press force generated as a result of movement of said first piston (31); and
a hand-brake unit (6),
said hand-brake unit (6) includes a driving member (61) which is movable along the mounting axis (L), a threaded socket (65) which is mounted on said first housing (21), which is driven by said driving member (61) to move along the mounting axis (L) relative to said first housing (21), and a threaded shaft (68) which is threadedly engaged with said threaded socket (65) and which is rotatably connected with said first piston (31), **characterized in that**:
said threaded socket (65) has a tubular wall (652) which extends through said mounting hole (213), said tubular wall (652) having an inner tubular surface (653) which defines a counterbore (655) and which is formed with an internally threaded section (654), said internally threaded section (654) having a plurality of first stab flanks (656) which face an opened end of said counterbore (655) and which are spaced apart from one another, a plurality of first load flanks (657) which face away from said opened end of said counterbore (655) and which are spaced apart from one another, and a plurality of roots (658), each of which interconnects each of said first stab flanks (656) and an adjacent one of said first load flanks (657),
said threaded shaft (68) having a head (681) which is rotatably connected with said first piston (31), and a bolt (682) which extends from said head (681) along the mounting axis (L) and which has an externally threaded section (683) that is threadedly engaged with said internally threaded section (654), said externally threaded section (683) having a plurality of second stab flanks (684) which face away from said head (681) and which are spaced apart from one another, a plurality of second load flanks (685) which face said head (681) and which are spaced apart from one another, and a plurality of crests (686), each of which interconnects each of said second stab flanks (684) and an adjacent one of said second load flanks (685),
each of said internally threaded section (654) and said externally threaded section (683) being in form of a multi-start thread, said internally threaded section (654) having a first thread angle (θ1) between each of said first stab flanks (656) and said adjacent first load flank (657), said externally threaded section (683) having a second thread angle (θ2) between each of said second stab flanks (684) and said adjacent second load flank (685), said first thread angle (θ1) and said second thread angle (θ2) being equal and ranging from 65 degrees to 85 degrees,
wherein, said first piston (31) is pressed by hydraulic oil in said first oil chamber (211) to move toward said first lining member (41) and to rotate said threaded shaft (68) about the mounting axis (L) relative to said threaded socket (65), and along with the rotation of said threaded shaft (68), said threaded shaft (68) actuates said first piston (31) to move along the mounting axis (L) away from said threaded socket (65) to permit said first piston (31) to press said first lining member (41), which brings said first lining member (41) to abut against the first end surface (11) of the brake disc (10).

2. The brake caliper of claim 1, wherein said internally threaded section (654) has a third flank angle (θ3) between each of said first stab flanks (656) and an imaginary line perpendicular to the mounting axis (L), said externally threaded section (683) has a fourth flank angle (θ4) between each of said second stab flanks (684) and the imaginary line perpendicular to the mounting axis (L), and said third flank angle (θ3) and said fourth flank angle (θ4) are equal and range from 45 degrees to 55 degrees.

3. The brake caliper of claim 1, wherein said threaded shaft (68) has a head (681) which is rotatably embedded in said first piston (31), and a bolt (682) which extends from said head (681) along the mounting axis (L), said hand-brake unit (6) further including a retaining assembly (69) which retains said threaded shaft (68) to said first piston (31), said retaining assembly (69) having a bearing (691) which abuts against said head (681), a washer (692) which abuts against said bearing (691) at a side opposite to said head (681), and a snap ring (693) which abuts against said washer (692) and which is mounted on said first piston (31) to hold said threaded shaft (68) from movement along the mounting axis (L) relative to said first piston (31).

4. The brake caliper of claim 3, wherein said first piston (31) has a surrounding wall (311) which surrounds the mounting axis (L), a side wall (312) which is connected with an end of said surrounding wall (311) proximal to the brake disc (10), a piston crown (313) which extends from said side wall (312) toward the brake disc (10), and a notched slot (315) which is formed in said side wall (312) and recessed from an end surface of said side wall (312), said head (681) of said threaded shaft (68) being engaged in said notched slot (315), said snap ring (693) being retainingly engaged with said surrounding wall (311).
